# FASCICULE DE BREVET EUROPEEN

(11) **EP 0 979 953 B1**
(45) Date de publication et mention de la délivrance du brevet: **09.07.2003**
(21) Numéro de dépôt: 99401880.2
(22) Date de dépôt: 23.07.1999
(51) Int. Cl.: F16B 4/00

(54) **Dispositif de jonction de deux pièces**
Vorrichtung zum Verbinden von zwei Werkstücken
Device for connecting two workpieces

(30) Priorité: 11.08.1998 FR 9810289
(43) Date de publication de la demande: 16.02.2000
(73) Titulaire: CLIP-OFF, F-92000 Nanterre (FR)
(72) Inventeur: Barikosky, Michel, 75007 Paris (FR)
(74) Mandataire: Bloch, Gérard

(56) Documents cités:
- GB-A- 2 051 916
- GB-A- 2 273 542

## Description

L'invention concerne un dispositif de jonction de deux pièces de forme quelconque, utilisable notamment dans le domaine du bâtiment pour la pose de panneaux et parements pour revêtements de façades, habillages intérieurs, cloisons, etc.

Le document EP-A-0 335 778 enseigne un dispositif de ce type, de jonction par "clipsage" de deux pièces. Les deux pièces sont jointes par emboîtement, perpendiculairement à leurs surfaces de jonction, d'au moins un élément saillant de la surface de jonction de l'une des pièces dans un évidement de la surface de jonction de l'autre pièce et accrochage de l'élément saillant, par rappel élastique de celui-ci sur une partie de surface de l'évidement. Le dispositif de jonction comprend une chambre étanche dont une partie au moins de l'élément saillant constitue une partie de la chambre. Celle-ci communique par un conduit avec une pompe à vide extérieure. Pour déverrouiller le dispositif de jonction, on actionne la pompe à vide afin de créer une différence de pression entre la pression à l'intérieur de la chambre et la pression extérieure, une telle dépression dans la chambre étanche provoquant l'écartement des saillants de la surface sur laquelle ils sont accrochés.

Ce type de jonction assure un déverrouillage aisé et donc un démontage facile des deux pièces, mais nécessite, lors de la jonction, un positionnement précis et fastidieux des pièces à joindre, effectué par tâtonnement par un opérateur.

Par GB 2 051 916 (LUDFORD) et GB 2 273 542 (BLOHM), on connaît des dispositifs de jonction du type défini ci-dessus, dans lesquels l'élément femelle est globalement concave, avec une ouverture de passage de section rétrécie, et l'élément mâle est globalement convexe, avec une zone de section supérieure à celle de l'ouverture de passage de l'élément femelle afin d'assurer le verrouillage du dispositif de jonction.

La pénétration de l'élément mâle dans l'élément femelle est facilitée par la forme convexe de l'élément mâle et par la forme concave de l'élément femelle. Un opérateur peut ainsi emboîter l'élément mâle dans l'élément femelle sans positionnement préalable précis. Après assemblage, les deux pièces sont jointes fixement l'une à l'autre.

De tels dispositifs sont spécifiquement adaptés pour joindre deux pièces selon une position angulaire relative déterminée et fixe. Ainsi, avec le dispositif LUDFORD, les surfaces de jonction respectives des deux pièces jointes sont parallèles, alors qu'avec le dispositif BLOHM, elles sont perpendiculaires. De surcroît, avec de tels dispositifs, il existe un risque de rupture de la jonction ou des pièces elles-mêmes, provoqué par des phénomènes de dilatation ou de contraction des pièces.

La présente invention propose de pallier ces inconvénients.

A cet effet, l'invention concerne un dispositif de jonction de deux pièces par emboîtement d'un élément mâle dans un élément femelle, dans lequel l'élément mâle est déformable et ménage une cavité formant chambre étanche reliée à des moyens extérieurs destinés à mettre la chambre en dépression sous l'action de laquelle l'élément mâle est agencé pour se contracter afin de séparer les deux éléments, l'élément femelle étant globalement concave, avec une ouverture de passage de section rétrécie, et l'élément mâle étant globalement convexe, avec une zone de section supérieure à celle de l'ouverture de passage de l'élément femelle, afin d'assurer le verrouillage du dispositif de jonction, dispositif caractérisé par le fait que l'élément mâle et l'élément femelle forment une articulation, et sont mobiles en rotation l'un par rapport à l'autre.

Grâce à l'articulation, les pièces jointes peuvent se déplacer l'une par rapport à l'autre et être positionnées dans différentes positions angulaires, notamment sous l'influence de phénomènes de dilatation et de contraction.

Avantageusement, il est prévu des moyens de blocage en rotation agencés pour limiter la liberté de mouvement desdits éléments l'un par rapport à l'autre.

Avantageusement encore, au moins l'un desdits éléments est prolongé par un élément d'articulation.

Grâce à une double articulation, entre les deux éléments mâle et femelle d'une part et entre l'un de ces éléments et là pièce dont il est solidaire d'autre part, l'une des pièces, ou les deux, peuvent de se dilater, ou de se contracter. On réduit ainsi encore davantage le risque de rupture de la jonction ou des pièces elles-mêmes. Les efforts de dilatation, ou de contraction, qui provoquent un déplacement relatif des deux pièces l'une par rapport à l'autre, sont supportés grâce aux articulations.

L'invention sera mieux comprise à l'aide de la description suivante de différentes formes de réalisation du dispositif de jonction de l'invention, en référence au dessin annexé sur lequel:
- la figure 1 représente un élément femelle du dispositif de jonction, en section transversale, selon une première forme de réalisation;
- la figure 2 représente un élément mâle du dispositif de jonction de la figure 1, en section transversale;
- la figure 3 représente le dispositif de jonction de la figure 1 déverrouillé, en section transversale;
- la figure 4 représente le dispositif de jonction de la figure 1 verrouillé, en section transversale;
- la figure 5 représente le dispositif de jonction verrouillé, en section transversale, selon une deuxième forme de réalisation;
- la figure 6 représente le dispositif de jonction verrouillé, en section transversale, selon une variante de la deuxième forme de réalisation;
- la figure 7 représente le dispositif de jonction verrouillé, en section transversale, selon une troisième forme de réalisation et
- la figure 8 représente le dispositif de jonction verrouillé, en section transversale, selon une quatrième forme de réalisation.

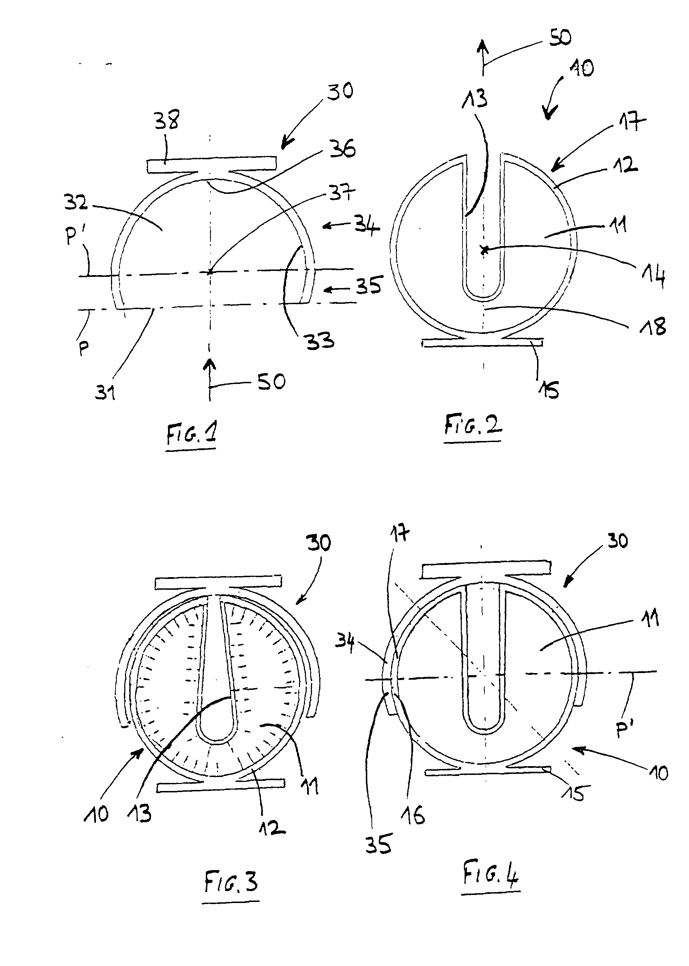

Dans l'exemple particulier de la description, le dispositif de jonction, représenté sur les figures 1 à 4, est destiné à joindre deux pièces, en l'espèce un panneau d'habillage de façade et ladite façade.

Le dispositif de jonction comprend un élément mâle 10, globalement convexe, et un élément femelle 30, globalement concave, destinés à être emboîtés l'un dans l'autre.

L'élément femelle 30, représenté sur la figure 1, est non déformable et comprend une paroi 33 ayant la forme d'un cylindre d'axe 37 tronqué dans un plan P parallèle à l'axe 37, et ménageant un logement 32 de réception de l'élément mâle 10, avec une ouverture 31 de passage de l'élément mâle 10 s'étendant dans le plan P.

L'élément femelle 30 comprend une zone 34, s'étendant entre le fond 36 du logement 32 et un plan P' parallèle au plan P et contenant l'axe 37, et une zone 35, s'étendant entre le plan P' et l'ouverture 31. La zone 34 est évasée depuis le fond 36 vers l'ouverture 31, jusqu'au plan P'. La zone 35 se rétrécit du plan P' vers l'ouverture 31, jusqu'à celle-ci. En d'autres termes, la section longitudinale du logement 32 augmente du fond 36 jusqu'au plan P', dans la zone 34, et diminue du plan P' jusqu'à l'ouverture 31, dans la zone 35. Par le terme "section longitudinale", on entend désigner une section dans un plan parallèle au plan P de l'ouverture 31. La section de l'ouverture 31 est ainsi rétrécie par rapport à la section longitudinale maximale (dans le plan P') du logement 32. En d'autres termes, la largeur de l'ouverture 31 est inférieure à la largeur maximale du logement 32, en section transversale.

L'élément femelle 30 se prolonge ici par une embase 38 de fixation à l'une des pièces à joindre, en l'espèce à la façade, s'étendant parallèlement au plan P, le long d'une génératrice de la face extérieure de la paroi 33, au voisinage du fond 36.

L'élément mâle 10, représenté sur la figure 2, consiste en une enceinte fermée avec un orifice, non représenté, communiquant par un conduit avec un appareil extérieur de mise en dépression, en l'espèce une pompe à vide. L'enceinte renferme une cavité 11 formant chambre étanche à l'air. Sous l'action d'une dépression dans la chambre 11, créée par la pompe à vide, l'élément mâle 10 est destiné à se contracter.

La paroi d'enceinte 12, en matériau déformable, a globalement une forme de cylindre d'axe 14, avec un rayon extérieur sensiblement égal au rayon intérieur du logement 32. L'élément mâle 10 présente une symétrie par rapport à un plan axial 18 (contenant l'axe 14).

La paroi d'enceinte 12 comporte une portion 13, ici concave, destinée à faciliter la contraction de l'élément mâle 10, sous l'action de la dépression dans la chambre 11, comme cela sera explicité dans la description du fonctionnement du dispositif. La portion concave 13 consiste en une membrane, plus déformable que le reste de la paroi 12. La portion 13 peut se déformer de façon élastique puis reprendre sa forme initiale, après déformation, par rappel élastique. La portion 13 s'étend à travers le plan de symétrie 18 et a ici une forme en "U" en section transversale, le "U" étant ouvert du côté d'une zone d'introduction 17 par laquelle l'élément mâle 10 est destiné à être introduit dans l'élément femelle 30.

L'élément mâle 10 se prolonge ici par une embase de fixation 15 destinée à être fixée à l'une des pièces à joindre, en l'espèce au panneau d'habillage. L'embase 15 est solidaire de la paroi d'enceinte 12 et s'étend le long d'une génératrice de la face extérieure de la paroi 12, opposée à la zone d'introduction 17.

L'élément mâle 10 est destiné à être introduit dans l'élément femelle 30 dans un sens d'introduction déterminé, représenté par les flèches 50 sur les figures 1 et 2, globalement perpendiculaire à l'axe 14 et parallèle au plan 18.

L'élément mâle 10 et l'élément femelle 30 appariés, par introduction de l'un dans l'autre, forment une articulation et sont mobiles en rotation l'un par rapport à l'autre.

Les formes respectives de l'élément femelle 30 et de l'élément mâle 10 sont telles que, après introduction de celui-ci dans celui-là, la paroi concave 33 du logement 32 est en contact avec la paroi d'enceinte 12 convexe. Une zone 16 et la zone d'introduction 17 de l'élément mâle 10 coopèrent par contact avec la zone 35 et avec la zone 34 de l'élément femelle 30, respectivement. La zone 16 a une section longitudinale supérieure à celle de l'ouverture de passage 31 de l'élément femelle 30 et la zone d'introduction 17 a une section longitudinale rétrécie par rapport à la section longitudinale maximale de l'élément mâle 10 (dans le plan P'), ce qui assure le verrouillage du dispositif de jonction, comme cela sera explicité plus loin. Les deux éléments 10, 30 sont ainsi agencés pour coopérer par leurs formes. On rappelle ici que qu'une section longitudinale s'entend d'une section dans un plan parallèle au plan P de l'ouverture 31.

Après la description structurelle du dispositif de jonction, son fonctionnement va maintenant être décrit.

On fixe l'élément mâle 10 sur le panneau d'habillage par vissage de l'embase de fixation 15 et l'élément femelle sur la façade par vissage de l'embase de fixation 38.

La pression dans la chambre 11 de l'élément mâle 10 étant initialement égale à la pression atmosphérique, on actionne la pompe à vide afin de mettre en dépression la chambre 11. Sous l'action de cette dépression, la portion concave 13 se referme partiellement, par rapprochement l'une de l'autre des deux branches en "U" en section transversale, en provoquant une contraction de l'élément mâle 10. Du fait de cette contraction, la section longitudinale maximale de l'élément mâle 10 (dans le plan perpendiculaire au sens d'introduction 50 et contenant l'axe 14) est légèrement inférieure à celle de la section de l'ouverture 31. On introduit alors sans effort l'élément mâle 10 dans l'élément femelle 30, par passage à travers l'ouverture 31.

Puis on arrête la pompe à vide de sorte que la pression dans la chambre 11 redevient très rapidement égale à la pression atmosphérique. Sous l'effet du retour à la pression atmosphérique dans la chambre 11, l'élément mâle reprend sa forme initiale, par rappel élastique. On verrouille ainsi le dispositif de jonction. La zone 16 de l'élément mâle 10 et la zone 35 de l'élément femelle coopèrent l'une avec l'autre, par contact, pour verrouiller le dispositif de jonction dans le sens opposé au sens d'introduction 50. La zone 17 de l'élément mâle 10 et la zone 34 de l'élément femelle 30 coopèrent, par contact, pour verrouiller le dispositif de jonction dans le sens d'introduction 50.

Pour séparer l'élément mâle 10 et l'élément femelle 30, autrement dit pour déverrouiller le dispositif de jonction, on actionne la pompe à vide pour mettre la chambre 11 en dépression et ainsi provoquer la contraction de l'élément mâle 10. Après contraction, la section longitudinale maximale de l'élément mâle 10 étant inférieure à la section de l'ouverture de passage 31, on retire sans effort l'élément mâle 10 hors de l'élément femelle 30, par passage à travers l'ouverture 31.

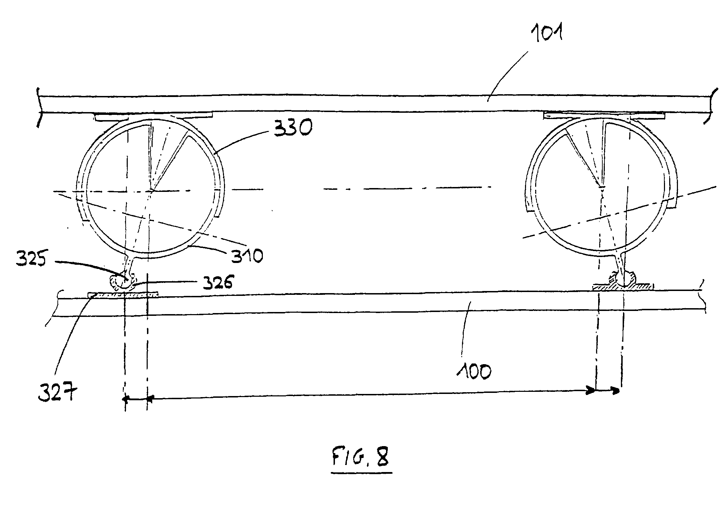

Dans la description qui vient d'être faite, les éléments, mâle 10 et femelle 30, sont globalement cylindriques et présentent donc une section transversale globalement circulaire. On pourrait également envisager que les éléments mâle 410 et femelle 430 présentent une section transversale globalement ovale, comme cela est représenté sur la figure 7.

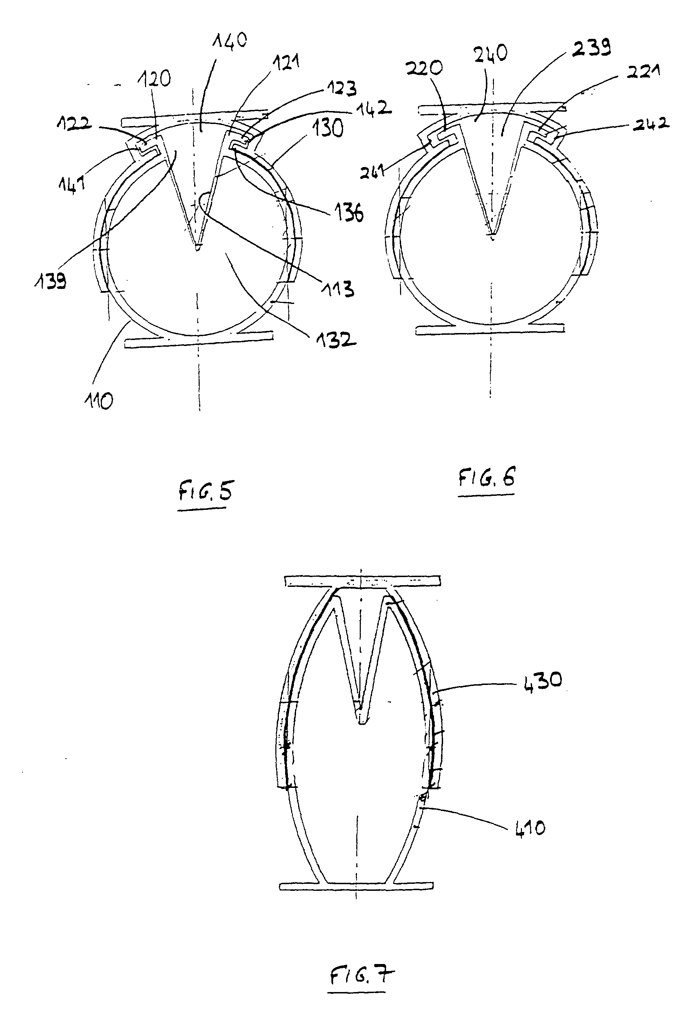

Une deuxième forme de réalisation (figure 5) du dispositif de jonction ne diffère de la forme de réalisation des figures 1 à 4 que par ce qui va maintenant être décrit. Par souci de clarté, les éléments du dispositif décrit ci-dessous porteront les références des éléments correspondants du dispositif précédemment décrit, incrémentées de cent.

L'élément mâle 110, de forme globale cylindrique, comprend une portion concave 113, destinée à faciliter la contraction de l'élément mâle 110, et deux saillants 120, 121, destinés à coopérer avec des butées de l'élément femelle 130 afin de limiter la liberté de mouvement des éléments 110, 130 l'un par rapport à l'autre. La portion concave 113 consiste en une membrane élastiquement déformable et forme ici un "V" en section transversale. En section transversale, les deux saillants 120, 121 prolongent respectivement les deux branches en V de la portion concave 113 et comprennent chacun une portion de butée 122, 123 s'étendant latéralement vers l'extérieur du V.

L'élément femelle 130 comprend un logement 132 de réception de l'élément mâle 110 communiquant par une ouverture longitudinale 139, ménagée dans le fond 136 du logement 132, avec un logement 140 de réception des saillants 120, 121.

La section de l'ouverture 139 est telle que les saillants 120, 121 ne peuvent être introduits dans le logement 140, par passage à travers l'ouverture 139, qu'après rapprochement des deux saillants 120, 121 l'un de l'autre par contraction de l'élément mâle 110. En revanche, la section de l'ouverture 131, supérieure à celle de l'ouverture 139, est telle que les saillants 120, 121 peuvent être introduits dans le logement 132, à travers l'ouverture 131, avant contraction de l'élément mâle 110, pour un pré-positionnement de l'élément mâle 110 et de l'élément femelle 130 l'un par rapport à l'autre, juste avant jonction.

Après introduction des saillants 120, 121 dans le logement 140 et retour de l'élément mâle 110 dans sa forme initiale par rappel élastique (après arrêt de la pompe à vide), les saillants 120, 121 viennent latéralement en butée contre les bords latéraux de l'ouverture 139 et, par leurs portions de butée 122, 123, contre des parois latérales 141, 142 du logement 140. Dans cette position, les saillants bloquent, par encastrement, la rotation relative de l'élément mâle 110 et de l'élément femelle 130 l'un par rapport l'autre. On soulignera ici que les saillants 120, 121 n'interfèrent pas dans la coopération de formes entre l'élément de jonction mâle 110 et l'élément de jonction femelle 130.

Une variante de réalisation du dispositif de jonction, représentée sur la figure 6, ne diffère de la deuxième forme de réalisation décrite ci-dessus que par ce qui va maintenant être décrit. Les éléments de cette variante portent les références des éléments correspondants de la forme de réalisation de la figure 5 incrémentées de deux cents.

La section de l'ouverture 239 du logement 240 de réception des saillants 220, 221 est plus importante et les parois latérales 241, 242 du logement 240 sont plus éloignées l'une de l'autre, de sorte qu'après introduction des saillants 220, 221 dans le logement 240, chaque saillant 220 (221) est légèrement éloigné du bord voisin de l'ouverture 239 et de la paroi latérale 241 (242) voisine du logement 240. Une rotation limitée de l'élément femelle 230 et de l'élément mâle 210 l'un par rapport à l'autre est ainsi possible.

Une troisième forme de réalisation du dispositif de jonction, représentée sur la figure 8, ne diffère de la première forme de réalisation décrite (celle des figures 1 à 4) que par ce qui va maintenant être décrit. On notera que les éléments de cette troisième forme de réalisation porte les références des éléments correspondants de la première forme de réalisation décrite incrémentées de trois cents.

L'élément mâle 310 est prolongé par un élément d'articulation mâle 325 emboîté et monté mobile en rotation dans un élément d'articulation femelle 326 solidaire d'une embase 327 fixée ici sur un panneau de façade 100. L'élément mâle 310 est ainsi articulé sur la pièce 100 dont il est solidaire.

Le dispositif de jonction comprend ainsi une double articulation: l'une entre l'élément mâle 310 et l'élément femelle 330 et l'autre entre l'élément mâle 310 et le panneau de façade 100.

Sur la figure 8, le panneau de façade 100, monté sur une façade 101 par l'intermédiaire de deux dispositifs de jonction à double articulation (identiques à celui décrit ci-dessus) a subi une dilatation ayant provoqué un déplacement en translation du panneau dans son plan. Il en résulte, pour chaque dispositif de jonction, un pivotement de l'élément mâle 310 autour de son articulation sur le panneau 100, une rotation de l'élément mâle 310 par rapport à l'élément femelle 330 et un léger déplacement en profondeur, vers la façade 101, du panneau 100.

Pour contrôler la dilatation du panneau, des moyens, analogues à ceux de la forme de réalisation de la figure 6, pourraient être prévus pour limiter la liberté de rotation de l'élément mâle et de l'élément femelle l'un par rapport à l'autre.

Dans la troisième forme de réalisation qui vient d'être décrite, l'élément de jonction mâle 310 est prolongé par un élément d'articulation mâle 325 et le panneau de façade 100 supporte un élément d'articulation femelle 326. On aurait également pu envisager de prolonger l'élément de jonction mâle 310 par un élément d'articulation femelle (analogue à l'élément 326) et de monter un élément d'articulation femelle (analogue à l'élément 325) sur le panneau de façade 100.

On pourrait encore prévoir une articulation, analogue à celle qui vient d'être décrite, entre la façade et l'élément de jonction solidaire de celle-ci, soit à la place de l'articulation entre l'élément de jonction 310 et le panneau de façade 100, soit en sus de cette articulation.

En outre, dans la description qui précède des différentes formes de réalisation du dispositif de jonction, l'élément de jonction femelle et l'élément de jonction mâle sont respectivement solidaires de la façade et du panneau de façade. Bien évidemment, l'élément de jonction femelle et l'élément de jonction mâle pourraient tout aussi bien être respectivement solidaires du panneau de façade et de la façade.

Enfin, pour faciliter la contraction de l'élément de jonction mâle, la paroi d'enceinte de celui-ci pourrait simplement comprendre, à la place de la portion concave, une portion non concave consistant en une membrane élastiquement déformable. Cette membrane élastique pourrait s'étendre dans la surface de l'enveloppe cylindrique de l'élément de jonction mâle.

La membrane élastiquement déformable destinée à faciliter la contraction de l'élément mâle pourrait être fabriquée dans le matériau de constitution du reste de la paroi d'enceinte de celui-ci ou dans un autre matériau, par exemple en caoutchouc.

## Revendications

1. Dispositif de jonction de deux pièces (100, 101) par emboîtement d'un élément mâle (10; 110; 210; 310) dans un élément femelle (30; 130; 230; 330), dans lequel l'élément mâle est déformable et ménage une cavité (11) formant chambre étanche reliée à des moyens extérieurs destinés à mettre la chambre en dépression sous l'action de laquelle l'élément mâle (10; 110; 210; 310) est agencé pour se contracter afin de séparer les deux éléments (10, 30; 110, 130; 210, 230; 310, 330), l'élément femelle (30; 130; 230; 330) étant globalement concave, avec une ouverture de passage (31) de section rétrécie, et l'élément mâle (10; 110; 210; 310) étant globalement convexe, avec une zone (16) de section supérieure à celle de l'ouverture de passage (31) de l'élément femelle (30), afin d'assurer le verrouillage du dispositif de jonction, dispositif **caractérisé par le fait que** l'élément mâle (10) et l'élément femelle (30) forment une articulations et sont mobiles en rotation l'un par rapport à l'autre.

2. Dispositif selon la revendication 1, dans lequel sont prévus des moyens (120, 121 ; 220, 221) de blocage en rotation agencés pour limiter la liberté de mouvement desdits éléments (110, 130; 210, 230) l'un par rapport à l'autre.

3. Dispositif selon l'une des revendications 1 et 2, dans lequel l'un desdits éléments (310) est prolongé par un élément d'articulation (325).

4. Dispositif selon l'une des revendications 1 à 3, dans lequel ledit élément mâle (10; 110; 210; 310) est solidaire de l'une des pièces (100) et ledit élément femelle (30; 130; 230; 330) est solidaire de l'autre pièce (101).

5. Dispositif selon l'une des revendications 1 à 4, dans lequel l'élément mâle (10; 110; 210; 310) comporte une zone d'introduction (17) de section rétrécie et agencée pour coopérer avec une zone (34) de l'élément femelle (30; 130; 230; 330) évasée vers son ouverture (31).

6. Dispositif selon l'une des revendications 1 à 5, dans lequel lesdits éléments (10, 30; 110, 130; 210, 230; 310, 330) sont agencés pour coopérer par leurs formes.

7. Dispositif selon l'une des revendications 1 à 6, dans lequel l'élément mâle (10) comprend une membrane élastiquement déformable (13) destinée, sous l'action de la dépression dans la chambre (11), à faciliter la contraction de l'élément mâle (10).

8. Dispositif selon l'une des revendications 1 à 7, dans lequel l'élément mâle (10) ménage une portion concave (13) destinée, sous l'action de la dépression dans la chambre (11), à faciliter la contraction de l'élément mâle (10).

9. Dispositif selon l'une des revendications 1 à 8, dans lequel l'élément mâle (30; 130; 230; 330) consiste en une enceinte fermée avec un orifice de communication avec les moyens extérieurs de mise en dépression.

## Patentansprüche

1. Verbindungsvorrichtung, die zwei Teile (100, 101) verbindet, indem eine Außeneinheit (10; 110; 210; 310) in eine Inneneinheit (30; 130; 230; 330) eingebaut wird, wobei die Außeneinheit verformt werden kann und sich um einen Hohlraum (11) erstreckt, um eine abgedichtete Kammer zu bilden, die an äußere Mittel angeschlossen ist, um im Innern der Kammer ein Teilvakuum zu erzeugen, wobei die Außeneinheit (10; 110; 210; 310) so ausgelegt ist, um sich zusammenzuziehen, wenn sie dem Teilvakuum ausgesetzt ist, damit die beiden Einheiten (10; 30; 110; 130; 210; 230; 310; 330)) wieder getrennt werden können, wobei die Inneneinheit (30; 130; 230; 330) vornehmlich konkav ausgebildet ist und eine Zugangsöffnung (31) mit einem verengten Querschnitt umfaßt und die Außeneinheit (10; 110; 210; 310) vornehmlich konvex ausgebildet ist und eine Zone (16) mit einem Querschnitt umfaßt, der größer als die Zugangsöffnung (31) der Inneneinheit (30) ist, damit der Verschluß der Verbindungsvorrichtung sichergestellt ist, wobei diese Verbindungsvorrichtung **dadurch gekennzeichnet ist, daß** die Außeneinheit (10) und die Inneneinheit (30) ein Scharnier bilden und sich relativ miteinander drehen können.

2. Verbindungsvorrichtung wie in Anspruch 1 beansprucht, die ein Verdrehsicherungs-Verschlußmittel (120; 121; 220; 221) umfaßt, um die Freiheit der relativen Verschiebung der Einheiten (110; 130; 210; 230) zu begrenzen.

3. Verbindungsvorrichtung wie in Anspruch 1 beansprucht, wobei eine der Einheiten (310) durch ein Scharnierelement (325) erweitert ist.

4. Verbindungsvorrichtung wie in Anspruch 1 beansprucht, wobei die Außeneinheit (10; 110; 210; 310) fest an eines der Teile (100) angebracht ist und die Inneneinheit (30; 130; 230; 330) fest an das andere Teil (101) angebracht ist.

5. Verbindungsvorrichtung wie in Anspruch 1 beansprucht, wobei die Außeneinheit (10; 110; 210; 310) eine Einführungszone (17) mit verengtem Querschnitt umfaßt und dazu ausgelegt ist, mit der Zone (34) der Inneneinheit (30; 130; 230; 330) zusammenzuwirken, die sich zu ihrer Öffnung (31) hin aufweitet.

6. Verbindungsvorrichtung wie in Anspruch 1 beansprucht, **dadurch gekennzeichnet, daß** die Einheiten (10; 30; 110; 130; 210; 230; 310; 330) so ausgelegt sind, daß sie mit ihren Formen zusammen wirken.

7. Verbindungsvorrichtung wie in Anspruch 1 beansprucht, wobei die Außeneinheit (10) eine elastisch sich verformende Membrane (13) umfaßt, die bei Einwirken des Teilvakuums in der Kammer (11) das Zusammenziehen der Außeneinheit (10) erleichtert.

8. Verbindungsvorrichtung wie in Anspruch 1 beansprucht, wobei die Außeneinheit (10) sich unter einem konkaven Bereich (13) erstreckt, der bei Einwirken des Teilvakuums in der Kammer (11) das Zusammenziehen der Außeneinheit (10) erleichtert.

9. Verbindungsvorrichtung wie in Anspruch 1 beansprucht, wobei die Außeneinheit (30; 130; 230; 330) aus einem umschlossenen Bereich besteht, der eine Öffnung aufweist, die mit dem äußeren Mittel in Verbindung steht, welches das Teilvakuum herbeiführt.

## Claims

1. A junction device joining two parts (100, 101) by filing a male unit (10; 110; 210; 310) into a female unit (30; 130; 230; 330) wherein the male unit can be deformed and subtends a cavity (11) to form a sealed chamber connected to external means to generate a partial vacuum inside the chamber, the male unit (10; 110; 210; 310) being designed to contract when exposed to the partial vacuum in order to separate the two units (10; 30; 110; 130; 210; 230; 310; 330), the female unit (30; 130; 230; 330) being generally concave and comprising a passage opening (31) of constricted cross-section and the male unit (10; 110; 210; 310) being generally convex and comprising a zone (16) of a cross-section larger than that of the passage opening (31) of the female unit (30) in order to assure locking the junction device, where this junction device is **characterized in that** the male unit (10) and the female unit (30) form a hinge and can rotatably be moved with respect to each other.

2. Junction device as claimed in claim 1, comprising anti-rotation locking means (120; 121; 220; 221) to limit the freedom of movement of said units (110; 130; 210; 230) relative to each other.

3. Junction device as claimed in one of claims 1 and 2, wherein one of said units (310) is extended by a hinge element (325).

4. Junction device as claimed in one of claims 1 to 3, wherein said male unit (10; 110; 210; 310) is rigidly affixed to one of the parts (100) and said female unit (30; 130; 230; 330) is rigidly affixed to the other part (101).

5. Junction device as claimed in one of claims 1 to 4, wherein the male unit (10; 110; 210; 310) comprises an insertion zone (17) of constricted cross-section and designed to cooperate with a zone (34) of the female unit (30; 130; 230; 330) which flares towards its opening (31).

6. Junction device as claimed in one of claims 1 to 5, **characterized in that** said units (10; 30; 110; 130; 210; 230; 310; 330) are designed in mutually cooperating shapes.

7. Junction device as claimed in one of claims 1 to 6, wherein the male unit (10) comprises an elastically deforming membrane (13) that when acted on by the partial vacuum in the chamber (11) shall facilitate the contraction of the male unit (10).

8. Junction device as claimed in one of claims 1 to 7, wherein the male unit (10) subtends a concave portion (13) which when acted on by the partial vacuum in the chamber (11) shall facilitate the contraction of the male unit (10).

9. Junction device as claimed in one of claim 1 to 8, wherein the male unit (30; 130; 230; 330) consists of a sealed enclosure having an orifice communicating with the external means including a partial vacuum.
